# FASCICULE DE BREVET EUROPEEN

(11) **EP 0 520 025 B1**
(45) Date de publication et mention de la délivrance du brevet: **09.11.1994**
(21) Numéro de dépôt: 91906867.6
(22) Date de dépôt: 12.03.1991
(51) Int. Cl.: G05B 19/42

(54) **PROCEDE DE FABRICATION D'UN POINCON POUR EMBOUTIR DES TOILES EN VUE DE FORMER DES FILIGRANES ET DISPOSITIF POUR LA MISE EN OEUVRE DE CE PROCEDE**
PROZESS ZUR HERSTELLUNG EINES STEMPELS ZUM TIEFZIEHEN VON WASSERMARKSIEBEN UM WASSERZEICHEN HERZUSTELLEN UND VORRICHTUNG ZUR DURCHFÜHRUNG DIESES VERFAHRENS
PROCESS FOR MAKING A PUNCH TO EMBOSS FABRIC TO FORM WATERMARKS AND DEVICE FOR IMPLEMENTING IT

(30) Priorité: 13.03.1990 FR 9003145
(43) Date de publication de la demande: 30.12.1992
(73) Titulaire: ARJO WIGGINS S.A., 92442 Issy-les-Moulineaux (FR)
(72) Inventeur: DOUBLET, Pierre, F-77320 Jouy-sur-Morin (FR); PASSEBECQ, Claude, F-75016 Paris (FR); BIGOT, Etienne, F-77320 Jouy-sur-Morin (FR)
(74) Mandataire: Portal, Gérard
(86) Numéro de dépôt international: FR9100202
(87) Numéro de publication internationale: WO9114217

(56) Documents cités:
- EP-A- 0 273 826
- US-A- 3 857 025

## Description

La présente invention concerne un procédé pour fabriquer un poinçon utilisable pour emboutir les toiles d'une machine à papier, par exemple une toile utilisable pour réaliser des filigranes. Le poinçon peut être l'outil qui permet d'emboutir directement la toile ou peut être un poinçon type utilisé pour réaliser directement d'autres poinçons par galvanoplastie.
Elle concerne en outre le dispositif pour la mise en oeuvre d'un tel procédé.

On fabrique le papier filigrané, par exemple un papier fiduciaire, notamment papier pour billets de banque ou pour têtes de lettres luxueuses, dans une machine à forme ronde ou une machine à table plate, qui comprend traditionnellement plusieurs toiles métalliques à mailles, ces toiles étant superposées et permettant d'égoutter la suspension de fibres de cellulose à partir de laquelle on fabrique le papier. On utilise en général deux toiles qui sont cylindriques et qui comportent des emboutissages en creux et/ou en relief, ce qui permet d'obtenir des densités de fibres variables et ce qui forme ainsi les filigranes.

Pour effectuer l'emboutissage des toiles on utilise habituellement un outil d'emboutissage ou poinçon qui est réalisé en cuivre ou en nickel, en général par galvanoplastie.

Ainsi lorsque l'on veut obtenir une reproduction d'un dessin en tant que filigrane, un artiste recopie et interprète le dessin. L'artiste grave ensuite une cire à partir de ce dessin. Une telle gravure peut demander quinze jours à l'artiste filigraneur. Puis on reproduit une réplique en matière polymérisable de cette cire. On rend ensuite la réplique conductrice et on la plonge dans un bain de galvanoplastie pour obtenir un contretype et enfin on réalise un outil d'emboutissage par électroformage, cet outil étant en cuivre ou en nickel.

On comprend que ces différentes manipulations sont longues et délicates.

On a donc essayé dans la technique antérieure de réaliser des outils pour le poinçonnage des toiles de forme ronde en effectuant un usinage par étincelage ou électro-érosion.Un tel procédé est décrit dans la demande de brevet européen déposée par la Banque de France EP-A-252 842. Selon ce document on réalise un outil en acier servant à l'emboutissage des toiles formaires d'une forme ronde par électroérosion à partir d'une électrode. Cette électrode est gravée par usinage plan par plan. Cette électrode est en graphite et l'usinage se fait niveau par niveau. Par exemple, pour obtenir une profondeur de gravure de 20 mm, selon ce procédé, on effectue quarante passes. Ainsi pour obtenir une profondeur de gravure allant jusqu'à 20 mm, il faudra un temps d'usinage d'environ 60 heures.

Un tel procédé qui vise à résoudre le problème de la durée importante des manipulations manuelles pour réaliser un outil en acier ne parvient donc que très partiellement à réaliser ses objectifs.

De plus, on utilise une pièce en graphite qui est une matière fragile, comme c'est mentionné dans ce document.

La technique d'électro-érosion nécessite l'utilisation d'un liquide diélectrique, par exemple une huile très fluide, de faible volatilité et de point éclair élevé. Il s'agit de kérosène.

En outre selon ce procédé, il est nécessaire de maintenir la distance entre l'électrode et la pièce à usiner à la valeur de l'épaisseur de diélectrique qui peut être rompue par les décharges électriques. Le maintien de cette distance donnée entre l'électrode et la pièce peut compliquer le procédé et le dispositif.

Le brevet Canadien n° 1 003 049 décrit un procédé de fabrication d'un badge en métal, obtenu à l'aide d'une électro-érosion. Ce badge est plan, c'est à dire qu'il est bidirectionnel. Le document EP-A-252 842 décrit donc un moyen pour obtenir une électrode de graphite tridirectionnelle. Ce moyen consiste à effectuer la gravure selon plusieurs plans de profondeurs croissantes. On effectue donc un premier passage de gravure, puis un second, un énième passages. Il s'agit donc d'une gravure discontinue.

La demande de brevet européen EP-A-273 826 décrit un procédé de gravure automatique de petits objets d'ornement ou d'usage. Ce procédé a pour but de représenter fidèlement les traits distinctifs d'un sujet déterminé. Il consiste à:
- analyser par balayage l'image du sujet concerné,
- produire des séries primaires de signaux numériques,
- traiter les séries primaires pour produire des séries secondaires de signaux représentatives de la gravure à réaliser, de façon à produire des suites de signaux numériques de commande de déplacements relatifs d'une ébauche et d'un outil de gravure du type à trois axes de déplacement X, Y, Z, lesdites séries secondaires étant formées de signaux binaires, deux signaux binaires contigus définisant un segment primitif d'une ligne à graver.

Les séries de signaux de commande de déplacement comprennent d'une part des doubles suites continues d'impulsion de commande de déplacements horizontaux et d'autre part une suite discontinue d'impulsions de commande de déplacements verticaux élémentaires déterminant la profondeur de gravure.

L'inconvénient d'un tel procédé est qu'il ne permet de fournir que des représentations fidèles d'un sujet déterminé. De plus, il utilise des séries binaires qui nécessitent des traitements compliqués et longs. Enfin, la gravure est effectuée de façon discontinue. En fait, la gravure est effectuée plan par plan.

La présente invention vise à pallier ces inconvénients.

Un premier but de l'invention est de s'affranchir de la technique d'électro-érosion et donc de supprimer l'intermédiaire de l'électrode en graphite, ce qui permet aussi de ne pas utiliser de liquide diélectrique, et donc de ne pas à avoir à régler la distance entre le poinçon à réaliser et l'électrode.

Un second but de l'invention est de réaliser le poinçon de manière beaucoup plus rapide que les procédés de la technique antérieure.

Un troisième but est de fournir un procédé qui permette à partir d'un dessin, d'une esquisse, d'éléments graphiques ou d'une photographie, de pouvoir les interpréter automatiquement, par exemple de pouvoir les réduire en dimensions,les agrandir, les inverser,les interpréter dans leurs contrastes, les simplifier, les caricaturer, de définir des contours anamorphoses, etc et d'obtenir ainsi un poinçon plus ou moins grand et de forme désirée.

Un quatrième but de l'invention est de réaliser une pièce d'emboutissage constituée d'un poinçon ou matrice et d'une contrematrice.

A cet effet, l'invention concerne un procédé de fabrication d'un poinçon d'emboutissage, destiné à réaliser des toiles filigraneuses, notamment des toiles des machines à papier dites "formes rondes" ou des toiles des machines à papier tables plates, selon lequel on effectue la saisie et on numérise les valeurs d'une image, lesdites valeurs comprenant les valeurs des positions des points de l'image et les valeurs représentant les niveaux de gris des points de l'image, caractérisé par le fait que l'on associe aux valeurs numériques de l'image, une surface continue tridimensionnelle selon des courbes de niveau, on traite les courbes de niveau et on obtient des valeurs de commande de la trajectoire d'un outil de gravure, ladite trajectoire étant continue, on grave automatiquement le poinçon.

Le procédé selon l'invention consiste donc à associer à l'image numérique, une surface continue tridimensionnelle comme selon des courbes de niveau.

Le procédé de l'invention est remarquable du fait que l'on ne grave pas plan par plan une électrode intermédiaire, mais que l'on grave directement le poinçon, la trajectoire de gravure étant réglée de façon continue.

Le procédé de l'invention consiste donc à transformer une image numérique en une surface continue à partir de laquelle on obtient une trajectoire continue de l'outil. Ainsi, au volume numérique, on associe une surface continue couvrant ce volume.

Les courbes de niveau obtenues fournissent la trajectoire de l'outil.

Selon un mode de réalisation préféré de l'invention, après la première étape (a), on reconstitue et visualise, à partir des valeurs de l'image numérisée, une image constituée de points de niveaux de gris variables, et on interprète l'image ainsi visualisée pour obtenir une image désirée, ainsi que les valeurs correspondantes. On peut éventuellement imprimer l'image interpétée, soit en noir et blanc, soit en couleur.

Le fait que l'on visualise l'image, par exemple sur un écran d'ordinateur, et que l'on puisse la modifier et l'interpréter, présente un grand avantage. En effet, le procédé selon l'invention est destiné à permettre la gravure d'un poinçon qui est ensuite utilisé pour emboutir des toiles filigraneuses. Or, il est bien connu par l'Homme du Métier, que pour obtenir un filigrane correct, il est nécessaire que la forme du pionçon soit distincte de la forme du filigrane. En effet, le filigrane est réalisé lors de la formation de la feuille de papier. Cette feuille est obtenue de manière connue à partir d'une dispersion aqueuse de fibres de cellulose et autres fibres naturelles ou synthétiques, des liants, des charges diverses. Puis, la dispersion est disposée sur une toile métallique et essorée, comprimée et enfin séchée. Du fait que la toile est emboutie, le filigrane apparaît par suite d'une modification de la densité des fibres aux endroits où la toile est emboutie. En outre, la feuille de papier non encore séche est déplacée, par exemple dans le sens longitudinal de la toile, lorsqu'il s'agit d'une table plate. Le déplacement provoque une déformation dans le sens "machine". Le filigrane est donc légèrement déformé et ne correspond plus à la forme du poinçon.

De plus, on souhaite souvent proposer plusieurs interprétations différentes d'une même image de départ. Enfin, on souhaite parfois rajouter du texte près de l'image. Il est possible aussi que l'on souhaite obtenir deux images inverses et strictement symétriques.

De préférence, on numérise, on anamorphose, on interprète les contrastes et les vraies ou les fausses couleurs et/ou on caricature les contours de l'image initiale.

On peut de préférence créer de toutes pièces un dessin, un texte, une image, numériser les valeurs de ceux-ci et faire correspondre à ces valeurs numériques des surfaces qui représentent la trajectoire de l'outil de gravure.

Selon un mode de réalisation de l'invention, on effectue l'étape de numérisation et l'étape de gravure pendant des périodes de temps distinctes.

On comprend qu'un tel procédé qui permet de graver un poinçon selon une certaine image, tout en créant simultanément une autre image, permet encore d'augmenter la rapidité du procédé selon l'invention.

On peut aussi effectuer l'enregistrement en mémoire des valeurs numériques de l'image, interprétée ou non. De préférence,on enregistre en mémoire les valeurs des courbes de niveau. On peut saisir les valeurs d'une image déjà existante ou on crée une image de toutes pièces. Selon le procédé, les valeurs de l'image sont tridimensionnelles.

Le procédé selon l'invention consiste en outre à transformer les valeurs des images numériques pixels en un réseau de points définis en coordonnées x, y et en altitude z, les points étant associés au niveau de gris du ou des pixels.

On peut aussi selon ce procédé associer au réseau de points (x, y, z) une surface continue et lissée. On obtient la courbe du contour par lissage.

On peut modifier les nuances de l'image (x, y, z) par compression, extension ou en fixant des seuils, en vue d'exagérer les contrastes.

On peut réaliser des pièces décalées les unes avec les autres d'une quantité choisie, en faisant rouler une bille d'un diamètre choisi pour obtenir une nouvelle surface à partir d'une surface primitive. Ainsi, on peut réaliser une première pièce qui constituera la matrice de poinçonnage proprement dite et une seconde pièce qui est décalée dans sa forme de la première et qui constituera la contre-matrice. La toile sera emboutie entre la matrice et la contre-matrice qui sont décalée de l'épaisseur de la toile.

L'invention concerne en outre un dispositif pour la mise un oeuvre d'un tel procédé.

Le dispositif de fabrication d'un poinçon d'emboutissage selon l'invention comprend:
- a) des moyens de saisie et de numérisation des valeurs d'une image, lesdites valeurs comprenant les valeurs des positions des points de l'image et les valeurs représentant les niveaux de gris des points de l'image,
- b) des moyens pour associer aux valeurs numériques de l'image, une surface continue tridimensionnelle, des moyens pour tracer les courbes de niveau de cette surface continue,
- c) des moyens de traitement des courbes de niveau pour obtenir des valeurs de commande de la trajectoire d'un outil de gravure, ladite trajectoire étant continue,
- d) des moyens de gravure automatique et directe du poinçon.

Le dispositif peut comprendre en outre des moyens de création d'une image, des moyens de modification de la grandeur de l'image, des moyens de création d'une image symétrique à une autre image.

Le dispositif peut comprendre aussi des moyens de visualisation d'une image en noir et blanc, en couleurs, bi- ou tri-dimensionnellement et des moyens d'impression d'une telle image.

La description suivante en regard des dessins annexés à titre d'exemples non limitatifs permettra de comprendre comment l'invention peut être mise en pratique.

La figure 1 est une vue schématique du dispositif selon l'invention.

La figure 2 est un schéma montrant les différentes étapes d'un procédé de fabrication d'un poinçon selon l'invention.

La figure 3 est une vue schématique illustrant la transformation d'une image numérique volumique en une surface continue.

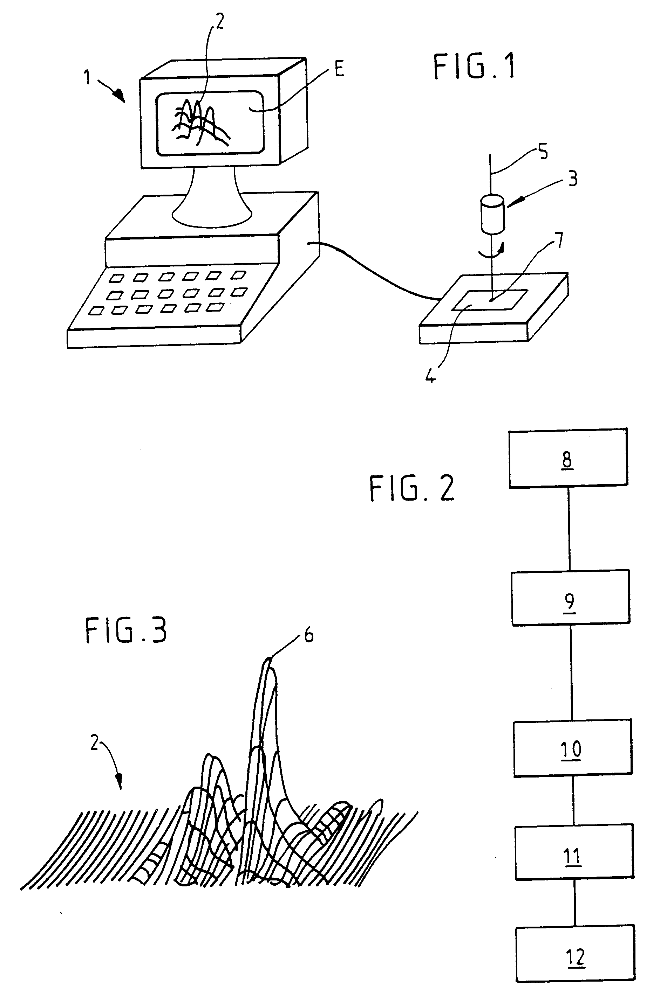

On voit sur la figure 1 que le dispositif de fabrication d'un poinçon selon l'invention comprend des moyens de numérisation 1 d'une image 2. Ces moyens peuvent être constitués par une mémoire associée à un logiciel qui permet par exemple à partir d'une photographie de numériser par pixels ou par vecteurs une image. La saisie de l'image peut se faire à partir d'une photographie ou d'un dessin ou au moyen d'un scanner, de manière connue à l'aide d'un logiciel du commerce. Cet élément de départ en deux dimensions comprend des valeurs de contrastes permettant une représentation tridimensionnelle. La numérisation peut être effectuée par un scanner ou une caméra et l'acquisition de l'image peut être faite en couleur ou en noir et blanc.

Le dispositif selon l'invention peut permettre d'interpréter l'image, les couleurs, les dimensions, de changer les contrastes, extraire les contours, anamorphoser.

Plus préférentiellement le dispositif permet de créer une image de toutes pièces. Cette image pourra par exemple être un dessin conçu directement par l'artiste qui pourra disposer de logiciels de conception de dessins par ordinateur (D.A.O.) ou de conception et fabrication assistées par ordinateur (C.F.A.O.). De tels logiciels sont couramment dans le commerce.

En outre l'artiste pourra créer des images inverses, symétriques, transformées mathématiquement selon une formule quelconque.

Selon un mode de réalisation de l'invention, le dispositif peut aussi comprendre une imprimante permettant de tracer l'image sur une feuille de papier. L'image obtenue pourra aussi comporter des cotes à des échelles définies.Elle pourra être en noir et blanc, en couleurs, bidimensionnelle ou être représentée avec des ombres permettant de la visualiser en trois dimensions.

Le dispositif comporte en outre des moyens de gravure 3 du poinçon 4. Ces moyens permettent la gravure directe en trois dimensions du poinçon. A cet effet le dispositif comporte des moyens de commande et de réglage de la trajectoire des moyens de gravure. Ces moyens de gravure 3 peuvent par exemple être une fraiseuse à commande numérique 5. L'invention est remarquable dans le fait que l'image est saisie tridimensionnellement et qu'à chaque valeur saisie correspond un point de gravure, ce point ayant des coordonnées spatiales tridimensionnelles. De plus, le point de gravure qui est positionné selon des coordonnées x, y, z, dans l'espace et donc dont la profondeur est réglée a une trajectoire continue et lissée. Le volume obtenu par fraisage est donc continu et ne présente pas un profil "en escalier" du type de celui obtenu par la technique antérieure, c'est à dire par fraisage pas à pas.

La figure 3 montre la manière dont est saisie l'image. Comme on peut le voir, l'image 2 est saisie selon des courbes de niveau 6, c'est à dire des courbes continues et lissées. Selon l'invention l'extrémité de la faiseuse 3, c'est à dire le point 7 de fraisage, a une trajectoire correspondant à ces courbes 6 de niveau.

On peut graver un poinçon métallique , par exemple du cuivre, de l'acier, de l'aluminium,ou en matière synthétique dure.

La figure 3 montre les étapes du procédé de l'invention.

La première étape 8 consiste à effectuer la saisie numérique d'une image. On obtient des valeurs qui correspondent à des points de coordonnées x, y et ayant des niveaux de gris correspondant à la profondeur z de gravure désirée.

A l'aide d'un logiciel vendu dans le commerce, on peut modifier les valeurs de l'image selon une étape 9. Ainsi on peut agrandir, réduire, transformer symétriquement ou homothétiquement l'image. De plus, on visualise l'image sur un écran E. L'artiste peut disposer d'un logiciel permettant de modifier cette image (étape 10). l'invention consiste donc à numériser l'image, à la modifier, l'interpréter.

On peut éventuellement imprimer cette image sur une imprimante en liaison avec le logiciel.

On peut stocker les valeurs correspondant à l'image modifiée, lorsque le travail d'interprétation et de création est terminé.

Les valeurs ainsi stockées dans un fichier sont introduits dans un autre ordinateur muni d'un logiciel permettant à partir de ces données de créer une représentation tridimentionnelle de l'image.

Dans l'étape suivante 11, on transforme l'image 3D en courbes (figure 3). Ces courbes qui forment un "filet" définissent la trajectoire de l'outil de gravure. A cet effet, on traite les données de ces courbes à l'aide d'un logiciel pour déterminer la trajectoire de la fraiseuse ou outil de gravure.

Selon l'étape 12 on grave automatiquement le poinçon 4. L'invention est remarquable dans le fait que l'on grave directement et de façon continue le poinçon.

Selon l'invention on peut sur un poste de travail créer des images de toutes pièce et/ou numériser des valeurs d'images existantes et/ou modifier des images et ensuite enregistrer les valeurs correspondantes sur une mémoire. Sur un poste de travail différent on peut ressaisir les images préalablement enregistrées et graver un poinçon.

De plus, l'invention est remaquable dans le fait que l'on peut enregistrer les données à chacune des étapes du procédé.

## Revendications

1. Procédé de fabrication d'un poinçon d'emboutissage, notamment de toiles destinées à la fabrication de papier filigrané, selon lequel on effectue la saisie et on numérise les valeurs d'une image, lesdites valeurs comprenant les valeurs des positions des points de l'image et les valeurs représentant les niveaux de gris des points de l'image, caractérisé par le fait que 1' on associe aux valeurs numériques de l'image, une surface continue tridimensionnelle, on trace les courbes de niveau de cette surface continue, on traite les courbes de niveau et on obtient des valeurs de commande de la trajectoire d'un outil de gravure, ladite trajectoire étant continue, on grave automatiquement le poinçon.

2. Procédé selon la revendication 1, caractérisé par le fait que l'on reconstitue à partir des valeurs obtenues, une image constituée de points comportant des niveaux de gris variables, on interprète cette image et on obtient une image modifiée ainsi que ses valeurs correspondantes.

3. Procédé selon la revendication 2, caractérisé par le fait que l'on imprime l'image modifiée.

4. Procédé selon l'une des revendications 1 et 2, caractérisé par le fait que l'on numérise, on anamorphose, on interprète les contrastes et les vraies ou les fausses couleurs et/ou on caricature les contours de l'image initiale.

5. Procédé selon l'une des revendications précédentes, caractérisé par le fait que l'étape de numérisation et l'étape de gravure sont effectuées pendant des périodes de temps distinctes et éloignées.

6. Procédé selon l'une des revendications précédentes, caractérisé par le fait que l'on enregistre en mémoire les valeurs numériques de l'image.

7. Procédé selon l'une des revendications précédentes, caractérisé par le fait que l'on enregistre en mémoire les valeurs des courbes de niveau.

8. Procédé selon l'une des revendications précédentes, caractérisé par le fait que l'on saisit les valeurs d'une image déjà existante.

9. Procédé selon l'une des revendications précédentes, caractérisé par le fait que l'on créé une image de toutes pièces.

10. Procédé selon l'une des revendications précédentes, caractérisé par le fait que les valeurs de l'image sont tridimensionnelles.

11. Procédé selon l'une quelconque des revendications précédentes, caractérisé par le fait qu'aux valeurs numériques des images on fait correspondre la trajectoire de gravure.

12. Procédé selon l'une quelconque des revendications précédentes, caractérisé par le fait que l'on transforme les valeurs des images numériques pixels en un réseau de points définis en coordonnées x, y et en altitude z, les points étant associés au niveau de gris du ou des pixels.

13. Procédé selon l'une quelconque des revendications précédentes, caractérisé par le fait que l'on associe au réseau de points (x, y, z) une surface continue et lissée.

14. Procédé selon l'une quelconque des revendications précédentes, caractérisé par le fait qu'on obtient la courbe du contour par lissage.

15. Procédé selon l'une quelconque des revendications précédentes, caractérisé par le fait que l'on modifie les nuances de l'image (x, y, z) par compression, extension ou en fixant des seuils, en vue d'exagérer les contrastes.

16. Procédé selon l'une quelconque des revendications précédentes, caractérisé par le fait que l'on réalise des pièces les unes avec les autres d'une quantité choisie, en faisant rouler une bille d'un diamètre choisi pour obtenir une nouvelle surface à partir d'une surface primitive.

17. Dispositif de fabrication d'un poinçon d'emboutissage ,notamment de toiles destinées à la fabrication de papier filigrané, comprenant des moyens de saisie et de numérisation (1) des valeurs d'une image (2), lesdites valeurs comprenant les valeurs des positions des points de l'image et les valeurs représentant les niveaux de gris des points de l'image, caractérisé par le fait qu'il comprend:
des moyens pour associer aux valeurs numériques de l'image, une surface continue tridimensionnelle, des moyens pour tracer les courbes de niveau (6) de cette surface continue,
des moyens de traitement des courbes de niveau pour obtenir des valeurs de commande de la trajectoire d'un outil de gravure, ladite trajectoire étant continue,
des moyens de gravure (3) automatique et directe du poinçon (4).

18. Dispositif selon la revendication 16, caractérisé par le fait qu'il comprend des moyens de visualisation de l'image,et éventuellement des moyens d'impression de l'image.

19. Dispositif selon l'une des revendications précédentes, caractérisé par le fait qu'il comprend des moyens de modification de l'image en grandeur et en couleur.

20. Dispositif selon l'une des revendications précédentes, caractérisé par le fait qu'il comprend un poste de création d'images et un poste de gravure pouvant fonctionner indépendamment l'un de l'autre.

## Patentansprüche

1. Verfahren zur Herstellung eines Prägestempels, insbesondere für Siebe, die für die Herstellung von Papier mit Filigranstruktur bestimmt sind, wobei die Werte eines Bilds erfaßt und digitalisiert werden und diese Werte die Positionswerte der Bildpunkte und die Werte enthalten, die die Graupegel der Bildpunkte repräsentieren, **dadurch gekennzeichnet**, daß den digitalen Bildwerten eine kontinuierliche dreidimensionale Oberfläche zugeordnet wird, daß die Graupegelkurven dieser kontinuierlichen Oberfläche gezeichnet werden, daß die Graupegelkurven verarbeitet werden und daß Werte für die Bahnsteuerung eines Gravurwerkzeugs erhalten werden, wobei die Bahn kontinuierlich ist, und daß das Werkzeug automatisch graviert wird.

2. Verfahren nach Anspruch 1, **dadurch gekennzeichnet**, daß man ein aus Punkten mit variablen Graupegelwerten gebildetes Bild ausgehend von den erhaltenen Werten rekonstruiert, daß dieses Bild interpretiert wird und daß man ein verändertes Bild sowie dessen entsprechende Werte erhält.

3. Verfahren nach Anspruch 2, **dadurch gekennzeichnet**, daß man das veränderte Bild druckt.

4. Verfahren nach einem der Ansprüche 1 und 2, **dadurch gekennzeichnet**, daß man das Bild digitalisiert, anamorphotisch behandelt, die Kontraste und die wahren oder falschen Farben interpretiert und/oder die Konturen des Ursprungsbildes in eine Karikatur verwandelt.

5. Verfahren nach einem der vorhergehenden Ansprüche, **dadurch** **gekennzeichnet**, daß der Verfahrensschritt der Digitalisierung und der Verfahrensschritt des Gravierens während bestimmter und nicht aneinander anschließender Zeitperioden erfolgen.

6. Verfahren nach einem der vorhergehenden Ansprüche, **dadurch gekennzeichnet**, daß die digitalen Werte des Bildes gespeichert werden.

7. Verfahren nach einem der vorhergehenden Ansprüche, **dadurch gekennzeichnet**, daß die Werte der Graupegelkurven gespeichert werden.

8. Verfahren nach einem der vorhergehenden Ansprüche, **dadurch gekennzeichnet**, daß die Werte eines bereits existierenden Bilds erfaßt werden.

9. Verfahren nach einem der vorhergehenden Ansprüche, **dadurch gekennzeichnet**, daß ein Bild in einem Schritt erzeugt wird.

10. Verfahren nach einem der vorhergehenden Ansprüche, **dadurch** **gekennzeichnet**, daß die Werte des Bilds dreidimensional sind.

11. Verfahren nach einem beliebigen der vorhergehenden Ansprüche, **dadurch gekennzeichnet**, daß den digitalen Werten des Bildes die Gravurbahn zugeordnet wird.

12. Verfahren nach einem beliebigen der vorhergehenden Ansprüche, **dadurch gekennzeichnet**, daß die Werte der digitalisierten Bildpunkte in ein Netz von in den Koordinaten x, y und in der Tiefe z definierten Punkten umgewandelt werden, wobei die Punkte dem Graupegel des oder der Bildpunkte zugeordnet sind.

13. Verfahren nach einem beliebigen der vorhergehenden Ansprüche, **dadurch gekennzeichnet**, daß dem Netz von Punkten (x, y, z) eine kontinuierliche und glatte Oberfläche zugeordnet ist.

14. Verfahren nach einem beliebigen der vorhergehenden Ansprüche, **dadurch gekennzeichnet**, daß man die Umrißkurve durch Glättung erzielt.

15. Verfahren nach einem beliebigen der vorhergehenden Ansprüche, **dadurch gekennzeichnet**, daß man die Nuancen des Bilds (x, y, z) durch Kompression, Streckung oder durch Anwendung einer Schwelle verändert, um die Kontraste zu vergrößern.

16. Verfahren nach einem beliebigen der vorhergehenden Ansprüche, **dadurch gekennzeichnet**, daß man gegeneinander um eine gewählte Größe versetzte Teile erzeugt, indem man eine Kugel eines gegebenen Durchmessers rollen läßt, um eine neue Oberfläche ausgehend von einer ursprünglichen zu erhalten.

17. Vorrichtung zur Herstellung eines Prägestempels, insbesondere für Siebe, die für die Herstellung von Papier mit Filigranstruktur bestimmt sind, mit Mitteln (1) zur Erfassung und Digitalisierung der Werte eines Bilds (2), wobei diese Werte die Positionswerte der Bildpunkte und die Werte enthalten, die die Graupegel der Bildpunkte repräsentieren, **dadurch gekennzeichnet**, daß die Vorrichtung aufweist:
- Mittel, um den digitalen Werten des Bildes eine kontinuierliche dreidimensionale Oberfläche zuzuordnen, und Mitteln (6), um die Graupegelkurven dieser kontinuierlichen Oberfläche zu zeichnen,
- Mittel zur Verarbeitung der Graupegelkurven, um Steuerwerte für die Bahn eines Gravurwerkzeugs zu erhalten, wobei die Bahn kontinuierlich ist,
- automatische Gravurmittel (3) zur direkten Erzeugung des Stempels (4).

18. Vorrichtung nach Anspruch 16, **dadurch gekennzeichnet**, daß sie Mittel zur Anzeige des Bilds und gegebenenfalls Mittel zum Druck des Bildes aufweist.

19. Vorrichtung nach einem der vorhergehenden Ansprüche, **da****durch gekennzeichnet**, daß sie Mittel zur Veränderung des Bilds hinsichtlich Größe und Farbe aufweist.

20. Vorrichtung nach einem der vorhergehenden Ansprüche, **dadurch gekennzeichnet**, daß sie einen Arbeitsplatz zur Erzeugung von Bildern und einen Gravurplatz aufweist, die unabhängig voneinander arbeiten können.

## Claims

1. Method for producing an embossing stamp, notably for embossing wires used for making watermarked paper whereby the values of an image are acquired and digitized, said values including the values of the positions of the image dots and the values representing the levels of gray of the image dots, characterized by the fact that a continuous three-dimensional surface is associated to the digital values of the image, the level curves of said continuous surface are plotted, said level curves are processed and control values controlling the path of an embossing stamp are obtained, said path being continuous, and the stamp is automatically engraved.

2. Method according to Claim 1, characterized by the fact that an image is reconstituted from the obtained values, said image being constituted of dots with varying levels of gray, said image is interpreted and a modified image is obtained as well as its corresponding values.

3. Method according to claim 2, characterized by the fact that the modified image is printed.

4. Method according to one of claims 1 and 2, characterized by the fact that the contrasts and the true or false colors are digitized, made anamorphic, interpreted and/or the contours of the initial image are caricatured.

5. Method according to one of the preceding claims, characterized by the fact that the digitizing step and the engraving step are carried out at different and well spaced out periods.

6. Method according to one of the preceding claims, characterized by the fact that the digital values of the image are stored.

7. Method according to one of the preceding claims, characterized by the fact that the values of the level curves are stored.

8. Method according to one of the preceding claims, characterized by the fact that values of an already existing image are acquired.

9. Method according to one of the preceding claims, characterized by the fact that a complete image is created.

10. Method according to one of the preceding claims, characterized by the fact that the values of the image are three-dimensional.

11. Method according to any one of the preceding claims, characterized by the fact that the engraving path is made to correspond to the digital values of the images.

12. Method according to one of the preceding claims, characterized by the fact that the values of the pixel digital images are converted into a lattice of dots defined in coordinates x, y and in altitude z, the dots being associated to the level of gray of the pixel or pixels.

13. Method according to any one of the preceding claims, characterized by the fact that a continuous and smoothed surface is associated to the lattice of dots (x, y, z).

14. Method according to any one of the preceding claims, characterized by the fact that the curve of the contour is obtained by smoothing.

15. Method according to any one of the preceding claims, characterized by the fact that the shades of the image (x, y, z) are modified by compression, extension or by fixing thresholds with a view to exaggerating the contrasts.

16. Method according to any one of the preceding claims, characterized by the fact that parts are produced one with the other of a selected quantity, by rolling a ball of a selected diameter to obtain a new surface from an original surface.

17. Device for producing an embossing stamp notably for embossing wires used for making watermarked paper, comprising means (1) for acquiring and digitizing the values of an image (2), said values including the values of the positions of the image dots and the values representing the levels of gray of the image dots, characterized by the fact that it comprises:
- means for associating a continuous three-dimensional surface to the digital values of the image,
- means (6) for plotting the level curves of said continuous surface,
- means for processing the level curves in order to obtain control values for controlling the path of an engraving tool, which path is continuous,
- means (3) for directly and automatically engraving the stamp (4).

18. Device according to claim 16, characterized by the fact that it comprises means for displaying the image, and optionally means for printing the image.

19. Device according to one of the preceding claims, characterized by the fact that it comprises means for modifying the image in size and colour.

20. Device according to one of the preceding claims, characterized by the fact that it comprises an image-creating station and an engraving station able to operate independently from each other.
